# EUROPÄISCHE PATENTSCHRIFT

(11) **EP 3 418 253 B1**
(45) Veröffentlichungstag und Bekanntmachung des Hinweises auf die Patenterteilung: **25.11.2020**
(21) Anmeldenummer: 17400040.6
(22) Anmeldetag: 20.06.2017
(51) Int. Cl.: C01B 3/48

(54) **VERFAHREN ZUR KÜHLUNG VON SYNTHESEGAS**
METHOD FOR THE COOLING OF SYNTHESIS GAS
PROCÉDÉ DE REFROIDISSEMENT DE GAZ DE SYNTHÈSE

(43) Veröffentlichungstag der Anmeldung: 26.12.2018
(73) Patentinhaber: L'AIR LIQUIDE, SOCIÉTÉ ANONYME POUR L'ÉTUDE ET L'EXPLOITATION DES PROCÉDÉS GEORGES CLAUDE, 75007 Paris (FR)
(72) Erfinder: Tadiello, Jean-Philippe, D-60431 Frankfurt am Main (DE); Wenz, Thomas, 40476 Düsseldorf (DE); Chen, Yue, D-60326 Frankfurt am Main (DE)
(74) Vertreter: Dropsch, Holger

(56) Entgegenhaltungen:
- EP-A1- 3 093 268
- EP-A1- 3 124 433
- WO-A1-2012/031683
- WO-A1-2017/008915
- DE-A1-102004 030 246
- US-A1- 2012 148 485

## Beschreibung

### Gebiet der Erfindung

Die Erfindung betrifft ein Verfahren zur Abkühlung eines durch katalytische Dampfreformierung eines kohlenwasserstoffhaltigen Einsatzgases erzeugten Synthesegases, das durch Wärmeaustausch mit Kesselspeisewasser zu dessen Umwandlung in Dampf, unter Abtrennung des dabei entstandenen wässrigen Kondensats, abgekühlt und in einer Anlage zur katalytischen Konvertierung von Kohlenmonoxid mit Wasserdampf in Wasserstoff und Kohlendioxid behandelt wurde.

### Stand der Technik

Verfahren zur Erzeugung von Wasserstoff und Kohlenmonoxid enthaltendem Synthesegas mittels katalytischer Dampfreformierung eines kohlenwasserstoffhaltigen Einsatzgases sind bekannt und beispielsweise in Ullmann's Encyclopedia of Industrial Chemistry, Sixth Edition, Vol. 15, Gas Production, Chapter 2. beschrieben. Die Einsatzgase, ein kohlenwasserstoffhaltiges Gas, wie z. B. Erdgas und Wasserdampf, werden dabei bei erhöhtem Druck, z. B. 20 bis 35 bar, und hoher Temperatur, z. B. 800 bis 950 °C, durch von außen beheizte, mit Katalysator gefüllte Reaktorrohre geleitet. Dabei werden die Einsatzgase in wasserstoff- und kohlenmonoxidreiches Synthesegas umgewandelt. Ein derartiger Reaktor wird häufig als SMR und das Verfahren als SMR-Verfahren bezeichnet, abgekürzt für AIR LIQUIDE-Aktenzeichen 2015P00290

Steam-Methane-Reformer. Für die Wirtschaftlichkeit des Verfahrens ist es sehr wichtig, einen möglichst effektiven Wärmeaustausch zwischen dem aus dem SMR austretenden Synthesegas und dem Einsatzgasen durchzuführen.

Nachdem das erzeugte Synthesegas den SMR verlassen hat, wird es durch Wärmeaustausch mit Kesselspeisewasser abgekühlt. Das Kesselspeisewasser wird dabei verdampft. Der Dampf wird als Einsatzdampf für das SMR-Verfahren verwendet und überschüssiger Dampf wird als sogenannter Exportdampf zur Verwendung außerhalb des SMR-Verfahrens ausgeleitet. Wenn als Endprodukt des SMR-Verfahrens ein ausschließlich aus Wasserstoff bestehendes Synthesegas erzeugt werden soll, dann wird das Synthesegas anschließend in einer Anlage zur katalytischen Konvertierung behandelt, in der das Kohlenmonoxid mit Wasserdampf in Wasserstoff und Kohlendioxid umgewandelt wird. Diese Konvertierung ist im oben erwähnten Ullmann-Band auf Seite 382 ff. beschrieben.

Das erfindungsgemäße Verfahren betrifft die sich an die bisher beschriebenen Schritte anschließende, weitere Abkühlung des Synthesegases.

Dabei wird das Synthesegas zunächst durch Wärmeaustausch mit dem kohlenwasserstoffhaltigen Einsatzgas weiter abgekühlt. Anschließend erfolgt eine weitere Abkühlung durch Wärmeaustausch mit entgastem Kesselspeisewasser, das anschließend dem Verdampfer zugeführt wird, dann durch Beheizung der Kesselspeisewasserentgasungsanlage und zur Vorheizung des frischen Kesselspeisewassers, vor dessen Einleitung in die Entgasungsanlage. Die Entgasung erfolgt rein physikalisch durch Erwärmung des Kesselspeisewassers. Dann wird das bis dahin im Synthesegas entstandene wässrige Kondensat, als sogenanntes heißes Kondensat, aus dem Synthesegasstrom abgeschieden. Daran anschließend wird das Synthesegas durch einen Luftkühler weiter, bis nahezu auf Umgebungstemperatur, abgekühlt und das dabei entstandene Kondensat, als sogenanntes kaltes Kondensat, mittels eines weiteren Kondensatabscheiders aus dem Synthesegas abgetrennt. Das abgetrennte heiße und kalte Kondensat wird verfahrensintern zur Erzeugung von Prozessdampf verwendet. Je nach Reinheit des Kondensats und den Reinheitsanforderungen an den Exportdampf wird es entweder vom frischen Kesselspeisewasser getrennt gehalten, in einem separaten Verdampfer zu Prozessdampf verdampft oder es wird in die Kesselspeisewasserentgasungsanlage geleitet und dort mit dem frischen Kesselspeisewasser vermischt.

Nachteilig an diesem Verfahren nach dem Stand der Technik ist der hohe apparative Aufwand mit dem das Kesselspeisewasser, wie oben beschrieben, in zwei Schritten erwärmt wird. Dabei wird zur Regelung der Vorheizung des Kesselspeisewassers eine Umgehungsleitung für das Synthesegas um den Wärmeaustauscher benötigt. Zur Aufteilung des Synthesegasstroms auf den durch den Wärmetauscher gehenden und den durch die Umgehungleitung gehenden Strom ist ein Dreiwegeventil oder zwei mechanisch miteinander verbundene Regelventile, wie sie in der deutschen Offenlegungsschrift 1 950 055 grundsätzlich beschrieben sind, erforderlich. Die mechanische Verbindung sorgt dabei dafür, dass beim Schließen des einen Ventils, das andere im gleichen Umfang geöffnet wird. Diese Ventile sind sehr teuer. Weiterhin muss das Rohrleitungssystem des Kesselspeisewassers durch ein Sicherheitsventil gegen Überdruck durch Eindringen von Synthesegas durch eine mögliche Undichtigkeit im Vorwärm-Wärmetauscher abgesichert werden. Dabei muss die Abblasleitung des Sicherheitsventils mit dem Fackelsystem der Dampfreformierungsanlage verbunden werden, wodurch aber Kesselspeisewasser in das Fackelsystem gelangen und dessen Funktion beeinträchtigen kann. Dieser hohe apparative Aufwand erfordert außerdem zusätzliche Bauhöhe der Anlage, denn eine grundsätzliche Problematik bei der Abkühlung des Synthesegases besteht darin, dass die Rohrleitung für das Synthesegas mit einem, stetigen Gefälle verlegt werden muss, damit das im Synthesegas gebildete Kondensat abfließen kann. Daraus folgt, dass jeder Abkühlungsschritt zusätzliche Gebäudehöhe und damit höhere Baukosten verursacht.

Eine Anlage und Verfahren zur Kühlung von Synthesegas ist auch aus EP3124433 A1 bekannt.

### Beschreibung der Erfindung

Aufgabe der Erfindung ist es daher, ein Verfahren zur Verfügung zu stellen, bei dem weniger Abkühlungsschritte und dadurch weniger Kosten für Equipment und Gebäude erforderlich sind.

Die Aufgabe wird gelöst durch die Erfindung gemäß den Merkmalen der Ansprüche 1 und 2.

### Erfindungsgemäßes Verfahren:

Verfahren zur Abkühlung eines durch katalytische Dampfreformierung eines kohlenwasserstoffhaltigen Einsatzgases erzeugten Synthesegases, das durch Wärmeaustausch mit Kesselspeisewasser zu dessen Umwandlung in Dampf, unter Abtrennung des dabei entstandenen wässrigen Kondensats, abgekühlt und in einer Anlage zur katalytischen Konvertierung von Kohlenmonoxid mit Wasserdampf in Wasserstoff und Kohlendioxid behandelt wurde, umfassend die folgenden Verfahrensschritte:
(a) Wärmeaustausch des Synthesegases mit dem kohlenwasserstoffhaltigen Einsatzgas,
(b) Einleitung von Kesselspeisewasser in eine einen Speisewasserbehälter umfassende Entgasungsanlage, wobei das Kesselspeisewasser vor der Einleitung in die Entgasungsanlage nicht durch Wärmeaustausch mit dem Synthesegas vorgewärmt wird, wobei das Kesselspeisewasser zu seiner Vorentgasung über einen auf dem Speisewasserbehälter installierten Dom im Gegenstrom zu aus dem Speisewasserbehälter aufsteigenden Wasserdampf in den Speisewasserbehälter einfließt und wobei der Wasserdampf mit den aus dem Speisewasser aufgenommenen Gasen zur weiteren Behandlung aus der Entgasungsanlage und dem Verfahren ausgeleitet wird,
(c) Wärmeaustausch des Synthesegases mit dem in der Entgasungsanlage entgastem Kesselspeisewasser,
(d) Wärmeaustausch wenigstens eines Teils des Synthesegases mit dem im Speisewasserbehälter der Entgasungsanlage enthaltenen Kesselspeisewasser,
(e) Wärmeaustausch des Synthesegases mit der Umgebungsluft,
(f) Abscheidung von Kondensat aus dem Synthesegas und Einleitung des Kondensats in die Entgasungsanlage, wobei das Kondensat zur Vorentgasung einen auf dem Speisewasserbehälter installierten Dom im Gegenstrom zu aus dem Speisewasserbehälter aufsteigendem Wasserdampf in den Speisewasserbehälter ein-fließt und wobei der Wasserdampf mit den aus dem Kondensat aufgenommenen Gasen aus der Entgasungsanlage und aus dem Verfahren zur weiteren Behandlung ausgeleitet wird,
(g) Weiterleitung des Synthesegases zur weiteren Behandlung außerhalb des Verfahrens.

Das Verfahren der Erfindung wird in der folgenden Anlage durchgeführt: Anlage zur Abkühlung eines durch katalytische Dampfreformierung eines kohlenwasserstoffhaltigen Einsatzgases erzeugten Synthesegases, das durch Wärmeaustausch mit Kesselspeisewasser zu dessen Umwandlung in Dampf, unter Abtrennung des dabei entstandenen wässrigen Kondensats, abgekühlt und in einer Anlage zur katalytischen Konvertierung von Kohlenmonoxid mit Wasserdampf in Wasserstoff und Kohlendioxid behandelt wurde, umfassend die folgenden Anlagenteile:
(a) Wärmeaustauscher für den Wärmeaustausch zwischen dem Synthesegas und dem kohlenwasserstoffhaltigen Einsatzgas,
(b) Wärmeaustauscher für den Wärmeaustausch zwischen dem Synthesegas und dem entgasten Kesselspeisewasser,
(c) Anlage zur Entgasung von Kesselspeisewasser, umfassend einen Speisewasserbehälter mit einem darin enthaltenen Wärmeaustauscher für den Wärmeaustausch zwischen Synthesegas und dem Kesselspeisewasser und mit mindestens einem auf dem Speisewasserbehälter installiertem Dom mit Einbauten für den Gas-Flüssig-Stoffaustausch, wie Füllkörperschüttungen oder strukturierte Packungen, über den das Kesselspeisewasser und/oder das aus dem Synthesegas abgetrennte Kondensat in den Speisewasserbehälter eingefüllt werden kann,
(d) Wärmeaustauscher für den Wärmeaustausch des Synthesegases mit der Umgebungsluft,
(e) Kondensatabscheider für die Abscheidung von Kondensat aus dem Synthesegas,
(f) eine Rohrleitung für die Zuführung des Kesselspeisewassers aus der nicht zur Anlage gehörenden Kesselspeisewassererzeugung zur Entgasungsanlage (c), wobei die Rohrleitung so verlegt ist, dass sie in dem Dom mündet, der zur Aufgabe des zu entgasenden Kesselspeisewassers in den Speisewasserbehälter Entgasungsanlage dient,
(g) Rohrleitung für den Transfer des Kondensats vom Kondensatabscheider (e) zur Entgasungsanlage (c), wobei die Rohrleitung so verlegt ist, dass sie in dem Dom mündet, der zur Aufgabe des Kondensats in den Speisewasserbehälter dient.

Die nach dem bisherigen Stand der Technik übliche Vorwärmung des Kesselspeisewassers durch Wärmeaustausch mit dem Synthesegas, vor dessen Eintritt in die Entgasungsanlage, entfällt erfindungsgemäß. Durch den Entfall des dafür bisher benötigten Wärmetauschers wird Gebäudehöhe eingespart. Die Vorwärmung des Kesselspeisewassers erfolgt nun im Aufgabedom der Entgasungsanlage, durch Wärmeaustausch mit aus dem Speisewasserbehälter aufsteigendern Wasserdampf. Diese Art der Vorwärmung wurde, nach bisherigem Stand der Technik, nur für das aus dem Synthesegas abgeschiedene und in die Entgasungsanlage zurückgeführte Kondensat durchgeführt. Zur Einbringung der nun zusätzlich benötigten Wärmeenergie zur Wasserdampferzeugung, wird die Fläche des im Speisewasserbehälter installierten Wärmeaustauschers entsprechend vergrößert. Weiterhin entfällt erfindungsgemäß der Kondensatabscheider zur Abscheidung des Kondensats aus dem Synthesegas nach dem Wärmeaustausch zwischen Synthesegas und Kesselspeisewasser. Durch den Wegfall dieses Kondensatabscheiders wird ebenfalls Gebäudehöhe eingespart. Der nachfolgenden Luftkühler, in dem das Synthesegas im Wärmeaustausch mit der Umgebungsluft auf ca. 40°C abgekühlt wird, muss daher das im Synthesegas verbliebene Kondensat mit abkühlen und muss daher größer ausgelegt werden.

### Bevorzugte Ausgestaltungen der Erfindung

Eine bevorzugte Ausgestaltung der Erfindung ist dadurch gekennzeichnet, dass das Kesselspeisewasser und das aus dem Synthesegas abgetrennte Kondensat jeweils über einen separaten Aufgabedom in den Speisewasserbehälter der Entgasungsanlage eingeleitet werden. Die Belastung des einzelnen Doms wird damit geringer und die Vorwärmung des Kesselspeisewassers verbessert.

### Ausführungsbeispiel

Weitere Merkmale, Vorteile und Anwendungsmöglichkeiten der Erfindung ergeben sich auch aus der nachfolgenden Beschreibung von Ausführungsbeispielen und der Zeichnungen. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung.

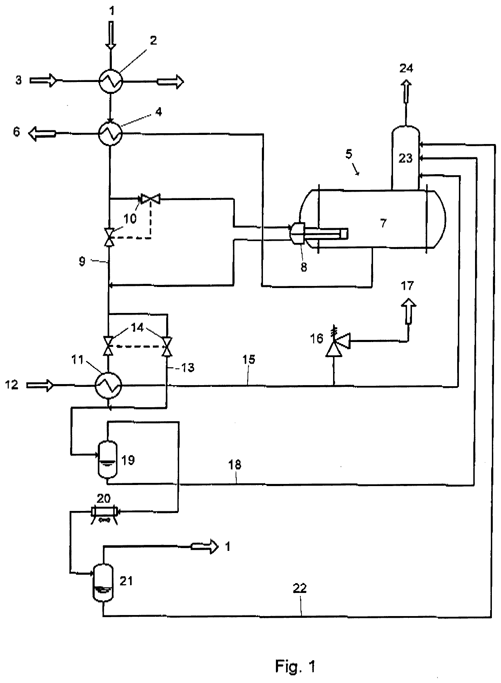

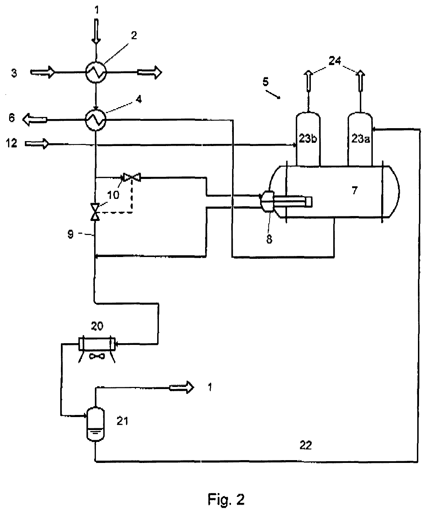

Das erfindungsgemäße Verfahren soll im Folgenden anhand der Zeichnungen Fig. 1 und 2 erläutert werden. Dabei zeigen:
- Fig. 1: ein Fließbild des Stands der Technik,
- Fig. 2: ein Fließbild einer beispielhaften Ausführung der Erfindung.

### Fig. 1:

Das Synthesegas 1 ist durch Wärmeaustausch und Verdampfung von Kesselspeisewasser zu Einsatzdampf und Exportdampf (in Fig. 1 bildlich nicht dargestellt) auf eine Temperatur von 360 °C abgekühlt und wird in Wärmetauscher 2 eingeleitet. Dort gibt es Wärme an den Erdgasstrom 3 ab, der als Einsatzgas der Dampfreformierung (bildlich nicht dargestellt) zugeleitet wird. Das Synthesegas 1 wird dann durch den Wärmetauscher 4 geleitet und erwärmt dadurch das in der Entgasungsanlage 5 entgaste Kesselspeisewasser 6. Das im Speisewasserbehälter 7 enthaltene Kesselspeisewasser wird mittels des Wärmetauschers 8 durch das Synthesegas 1 erwärmt. Die Leistung des Wärmetauschers 8 wird über den Bypass 9 und die mechanisch mit einander verbundenen Ventile 10 geregelt. Anschließend wird vom Synthesegas 1 das frische Kesselspeisewasser 12 vorgewärmt. Die Leistung des Wärmetauschers 11 wird ebenfalls über einen Bypass 13 und miteinander mechanisch verbundene Ventile 14 geregelt. Das Synthesegas 1 wird dabei auf ca. 90 °C abgekühlt. Da das Synthesegas 1 unter erhöhtem Druck steht, kann es bei einer Leckage im Wärmetauscher 11 in die Kesselspeisewasserleitung eindringen, die daher durch ein Sicherheitsventil 16 geschützt werden muss. Das Sicherheitsventil 16 bläst, im Ansprechfall, das Gas-Wasser-Gemisch 17 in das nicht dargestellte Fackelsystem ab. Das bis dahin entstandene Kondensat 18 wird im Abscheider 19 abgeschieden. Das Synthesegas 1 wird dann in Luftkühler 20 auf ca. 40 °C weiter abgekühlt und dann im Abscheider 21 vom Kondensat 22 befreit. Das Synthesegas 1 wird zur weiteren Behandlung außerhalb des Verfahrens ausgeleitet.

Das frische Kesselspeisewasser 15 und die Kondensate 18 und 22 werden über den Aufgabedom 23 in die Entgasungsanlage 5 eingespeist. Die aus dem Kesselspeisewasser ausgetriebenen Gase 24 werden an die Atmosphäre abgegeben.

### Fig. 2

In dieser beispielhaften Ausführung der Erfindung kommt eine Entgasungsanlage 5 mit zwei Aufgabedomen 23 a und b zum Einsatz. Durch die Verwendung von zwei Domen, einen für die Aufgabe des frischen Kesselspeisewassers 12 und einen für die Aufgabe des aus dem Synthesegas abgeschiedenen Kondensats 22, kann eine größere Kontaktfläche zwischen den aufgegebenen, zu entgasenden Flüssigkeiten und dem diesen aus dem Speiswasserbehälter entgegen strömenden Wasserdampf hergestellt werden. Erfindungsgemäß wird das frische Kesselspeisewasser 12 nicht durch Wärmeaustausch mit dem Synthesegas 1 vorgewärmt, bevor es in die Entgasungsanlage 5 eingeführt wird. Die Aufheizung durch das Synthesegas erfolgt ausschließlich im Speisewasserbehälter 7 durch den Wärmetauscher 8. Das dabei im Synthesegas 1 gebildete Kondensat verbleibt zunächst im Gas und wir im Luftkühler 20 mit abgekühlt und erst dann abgeschieden und in die Entgasungsanlage 5 eingeführt. Der Wegfall des Wärmetauschers 11 zur Vorwärmung des frischen Kesselspeisewassers 12 und des Kondensatabscheiders 19 führt zu einer Verringerung der Bauhöhe der Anlage zur Durchführung der Synthesegasabkühlung. Dafür müssen der Wärmetauscher 8 der Entgasungsanlage 5 und der Luftkühler 20 leistungsfähiger ausgelegt werden.

### Gewerbliche Anwendbarkeit

Die Erfindung ermöglicht eine niedrigere Bauhöhe und damit eine Einsparung an Gebäudekosten bei dem gewerblich vielfach eingesetzten Verfahren zur weiteren Abkühlung von Synthesegas. Die Erfindung ist damit gewerblich anwendbar.

### Bezugszeichenliste

- 1: Synthesegas
- 2: Wärmetauscher
- 3: Erdgas
- 4: Wärmetauscher
- 5: Entgasungsanlage
- 6: Kesselspeisewasser, entgast
- 7: Speisewasserbehälter
- 8: Wärmetauscher
- 9: Bypass
- 10: Ventile, mechanisch verbunden
- 11: Wärmetauscher
- 12: Kesselspeisewasser, frisch
- 13: Bypass
- 14: Ventile, mechanisch verbunden
- 15: Kesselspeisewasser, frisch, vorgewärmt
- 16: Sicherheitsventil
- 17: Gas-Wasser-Gemisch
- 18: Kondensat
- 19: Kondensatabscheider
- 20: Luftkühler
- 21: Kondensatabscheider
- 22: Kondensat
- 23: a, b Aufgabedom
- 24: ausgetriebene Gase

## Patentansprüche

1. Verfahren zur Abkühlung eines durch katalytische Dampfreformierung eines kohlenwasserstoffhaltigen Einsatzgases erzeugten Synthesegases, das durch Wärmeaustausch mit Kesselspeisewasser zu dessen Umwandlung in Dampf, unter Abtrennung des dabei entstandenen wässrigen Kondensats, abgekühlt und in einer Anlage zur katalytischen Konvertierung von Kohlenmonoxid mit Wasserdampf in Wasserstoff und Kohlendioxid behandelt wurde, umfassend die folgenden Verfahrensschritte:
(a) Wärmeaustausch des Synthesegases mit dem kohlenwasserstoffhaltigen Einsatzgas,
(b) Einleitung von Kesselspeisewasser in eine einen Speisewasserbehälter umfassende Entgasungsanlage, wobei das Kesselspeisewasser vor der Einleitung in die Entgasungsanlage nicht durch Wärmeaustausch mit dem Synthesegas vorgewärmt wird, wobei das Kesselspeisewasser zu seiner Vorentgasung über einen auf dem Speisewasserbehälter installierten Dom im Gegenstrom zu aus dem Speisewasserbehälter aufsteigenden Wasserdampf in den Speisewasserbehälter einfließt und wobei der Wasserdampf mit den aus dem Speisewasser aufgenommenen Gasen zur weiteren Behandlung aus der Entgasungsanlage und dem Verfahren ausgeleitet wird,
(c) Wärmeaustausch des Synthesegases mit dem in der Entgasungsanlage entgastem Kesselspeisewasser,
(d) Wärmeaustausch wenigstens eines Teils des Synthesegases mit dem im Speisewasserbehälter der Entgasungsanlage enthaltenen Kesselspeisewasser,
(e) Wärmeaustausch des Synthesegases mit der Umgebungsluft,
(f) Abscheidung von Kondensat aus dem Synthesegas und Einleitung des Kondensats in die Entgasungsanlage, wobei das Kondensat zur Vorentgasung einen auf dem Speisewasserbehälter installierten Dom im Gegenstrom zu aus dem Speisewasserbehälter aufsteigendem Wasserdampf in den Speisewasserbehälter einfließt und wobei der Wasserdampf mit den aus dem Kondensat aufgenommenen Gasen aus der Entgasungsanlage und aus dem Verfahren zur weiteren Behandlung ausgeleitet wird,
(g) Weiterleitung des Synthesegases zur weiteren Behandlung außerhalb des Verfahrens.

2. Verfahren gemäß Anspruch 1, **dadurch gekennzeichnet, dass** Kesselspeisewasser und das Kondensat jeweils über einen separaten Dom in den Speisewasserbehälter der Entgasungsanlage eingeleitet wird.

## Claims

1. Method for cooling a synthesis gas which has been generated by catalytic steam reforming of a hydrocarbon-containing feed gas and has been cooled by heat exchange with boiler feed water to convert it into vapour, with the resulting aqueous condensate being separated off, cooled and treated in a plant for catalytic conversion of carbon monoxide with steam into hydrogen and carbon dioxide, comprising the following method steps:
(a) heat exchange of the synthesis gas with the hydrocarbon-containing feed gas,
(b) introduction of boiler feed water into a degasification plant comprising a feed water tank, wherein the boiler feed water is not preheated by heat exchange with the synthesis gas before the introduction into the degasification plant, wherein for its preliminary degasification the boiler feed water flows into the feed water tank, via a dome installed on the feed water tank, in countercurrent to steam rising out of the feed water tank, and wherein the steam, with the gases absorbed from the feed water, is discharged from the degasification plant and from the method for further treatment,
(c) heat exchange of the synthesis gas with the boiler feed water degassed in the degasification plant,
(d) heat exchange of at least a part of the synthesis gas with the boiler feed water contained in the feed water tank of the degasification plant,
(e) heat exchange of the synthesis gas with the ambient air,
(f) precipitation of condensate out of the synthesis gas and introduction of the condensate into the degasification plant, wherein for preliminary degasification the condensate flows into the feed water tank a dome installed on the feed water tank in countercurrent to steam rising out of the feed water tank, and wherein the steam, with the gases absorbed from the condensate, is discharged from the degasification plant and from the method for further treatment,
(g) onward transfer of the synthesis gas for further treatment outside the method.

2. Method according to claim 1, **characterised in that** boiler feed water and the condensate are introduced in each case via a separate dome into the feed water tank of the degasification plant.

## Revendications

1. Procédé de réfrigération d'un gaz de synthèse produit par reformage à la vapeur catalytique d'un gaz d'alimentation hydrocarboné, qui est refroidi par échange de chaleur avec de l'eau d'alimentation de chaudière pour sa transformation en vapeur, avec séparation du condensat aqueux qui en résulte et qui a été traité dans une installation de conversion catalytique de monoxyde de carbone et de vapeur d'eau en hydrogène et dioxyde de carbone, comprenant les étapes du procédé suivantes :
(a) échange de chaleur du gaz de synthèse avec le gaz d'alimentation hydrocarboné,
(b) introduction d'eau d'alimentation de chaudière dans une installation de dégazage comprenant un récipient d'eau d'alimentation, l'eau d'alimentation de chaudière n'étant pas préchauffée avant l'introduction dans l'installation de dégazage par échange de chaleur avec le gaz de synthèse, l'eau d'alimentation de chaudière pour son pré-dégazage coule dans le récipient d'eau d'alimentation via un dôme installé sur le récipient d'eau d'alimentation à contre-courant par rapport à la vapeur d'eau sortant du récipient d'eau d'alimentation et la vapeur d'eau avec les gaz reçus de l'eau d'alimentation pour le traitement ultérieur étant évacuée de l'installation de dégazage et extraite du procédé,
(c) échange de chaleur du gaz de synthèse avec l'eau d'alimentation de chaudière dégazée dans l'installation de dégazage,
(d) échange de chaleur d'au moins une partie du gaz de synthèse avec l'eau d'alimentation de chaudière contenue dans le récipient d'eau d'alimentation de l'installation de dégazage,
(e) échange de chaleur du gaz de synthèse avec l'air ambiant,
(f) dépôt de condensat provenant du gaz de synthèse et introduction du condensat dans l'installation de dégazage, le condensat pour son pré-dégazage coulant dans le récipient d'eau d'alimentation un dôme installé sur le récipient d'eau d'alimentation à contre-courant par rapport à la vapeur d'eau sortant du récipient d'eau d'alimentation et la vapeur d'eau étant évacuée avec les gaz reçus du condensat émanant de l'installation de dégazage et extraite du procédé pour le traitement ultérieur,
(g) acheminement du gaz de synthèse pour le traitement ultérieur en dehors du procédé.

2. Procédé selon la revendication 1, **caractérisé en ce que** l'eau d'alimentation de chaudière et le condensat sont, respectivement, introduits via un dôme distinct dans le récipient d'eau d'alimentation de l'installation de dégazage.
